(19)

Europäisches
Patentamt
European
Patent Office
Office européen
des brevets

(11) **EP 4 166 281 A1**

(12) **EUROPEAN PATENT APPLICATION**
published in accordance with Art. 153(4) EPC

(43) Date of publication:
**19.04.2023 Bulletin 2023/16**

(21) Application number: **20947296.8**

(22) Date of filing: **29.07.2020**

(51) International Patent Classification (IPC):
**B25J 9/16** (2006.01)     **B25J 19/04** (2006.01)
**G06T 7/33** (2017.01)

(52) Cooperative Patent Classification (CPC):
**B25J 9/16; B25J 19/04; G06T 7/33**

(86) International application number:
**PCT/CN2020/105586**

(87) International publication number:
**WO 2022/021156 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Ltd. China
Beijing 100102 (CN)**

(72) Inventors:
• **WANG, Haifeng
  Shanghai 201105 (CN)**
• **ZHANG, Hongyang
  Shanghai 200065 (CN)**
• **YAO, Wei
  Beijing 100102 (CN)**

(74) Representative: **Isarpatent
Patent- und Rechtsanwälte Barth
Charles Hassa Peckmann & Partner mbB
Friedrichstrasse 31
80801 München (DE)**

(54) **METHOD AND APPARATUS FOR ROBOT TO GRAB THREE-DIMENSIONAL OBJECT**

(57)     Provided is a method for a robot to grab a three-dimensional object. The method comprises: determining the current position and posture of a visual sensor of a robot relative to a three-dimensional object; acquiring a grabbing template of the three-dimensional object, wherein the grabbing template comprises a designated grabbing position and posture of a visual sensor relative to the three-dimensional object; determining whether the grabbing template further comprises at least one reference grabbing position and posture of the visual sensor relative to the three-dimensional object, wherein the reference grabbing position and posture are generated on the basis of the designated grabbing position and posture; and on the basis of a determination result, generating, by using the grabbing template and the current position and posture, a grabbing position and posture of the robot. In the present disclosure, a movement path of the robot from the current position and posture to the grabbing position and posture is optimized by using the reference grabbing position and posture, thereby improving the flexibility of grabbing, improving the speed and efficiency of grabbing, and also saving energy. The method is simple and easily implemented, the amount of data calculation is small, and no expensive three-dimensional camera is needed, thereby saving time and economic costs.

Fig. 1

## Description

### Technical field

The present disclosure relates to the technical field of industrial robots, in particular to a method and apparatus for a robot to grab a three-dimensional object, a computing device, a computer-readable storage medium and a program product.

### Background art

The use of a robot to grab a three-dimensional object (3D object) is a type of process step that is commonly seen in industrial processes. When performing the task of grabbing an object, the relative positions and attitudes of the 3D object and a camera are especially important. At present, methods of estimating the relative positions and attitudes of a 3D object and a camera based on a two-dimensional camera (2D camera) generally use template matching or deep learning to estimate the positions and attitudes directly. In addition, some existing techniques use methods of estimating the relative positions and attitudes of a 3D object and a camera based on a three-dimensional camera (3D camera). In these existing techniques, the position and attitude of the 3D object in space are obtained by comparing the actually scanned 3D object with a model thereof.

For the acquisition of grabbing points and grabbing positions and attitudes, conventional methods include traction teaching and deep learning. In addition, conventional methods of indicating position and attitude generally use six parameters: x, y, z, roll angle, pitch angle and yaw angle.

### Summary of the invention

Conventional template matching methods based on a 2D camera cannot detect objects in a complex environment; as for methods of estimating position and attitude directly by deep learning, it is very complex and difficult to obtain the relative positions and attitudes of a 3D object and a camera. Methods of estimating position and attitude based on a 3D camera require a highly precise camera, are expensive, and are very time-consuming.

In addition, in traction teaching methods, the grabbing points and the grabbing positions and attitudes are fixed, so flexibility is lacking. The use of deep learning to compute the grabbing points and the grabbing positions and attitudes relies on a huge dataset, so is likewise expensive and time-consuming. Furthermore, the conventional six parameters indicating position and attitude are redundant in some cases, so the computing burden is increased.

A first embodiment of the present disclosure proposes a method for a robot to grab a 3D object, comprising: determining a current position and attitude of a visual sensor of the robot relative to the 3D object; acquiring a grabbing template of the 3D object, the grabbing template comprising a specified grabbing position and attitude of the visual sensor relative to the 3D object; judging whether the grabbing template further comprises at least one reference grabbing position and attitude of the visual sensor relative to the 3D object, wherein the reference grabbing position and attitude is generated on the basis of the specified grabbing position and attitude; and based on a judgment result, using the grabbing template and the current position and attitude to generate a grabbing position and attitude of the robot.

In this embodiment, by judging whether a preset grabbing template comprises a reference grabbing position and attitude of the 3D object to be grabbed, it is possible, when the grabbing template comprises a reference grabbing position and attitude, to use the reference grabbing position and attitude to optimize a movement path of the robot from the current position and attitude to the grabbing position and attitude, so the grabbing flexibility is increased, the grabbing speed and efficiency are increased, and energy is saved. In addition, the method is simple and easy to perform, the data computation amount is small, and there is no need for an expensive 3D camera, so time is saved and the economic cost is reduced.

A second embodiment of the present disclosure proposes an apparatus for a robot to grab a 3D object, comprising: a current position and attitude determining unit, configured to determine a current position and attitude of a visual sensor of the robot relative to the 3D object; a grabbing template acquisition unit, configured to acquire a grabbing template of the 3D object, the grabbing template comprising a specified grabbing position and attitude of the visual sensor relative to the 3D object; a reference position and attitude judgment unit, configured to judge whether the grabbing template further comprises at least one reference grabbing position and attitude of the visual sensor relative to the 3D object, wherein the reference grabbing position and attitude is generated on the basis of the specified grabbing position and attitude; and a grabbing position and attitude generating unit, configured to use the grabbing template and the current position and attitude to generate a grabbing position and attitude of the robot, based on a judgment result.

A third embodiment of the present disclosure proposes a computing device, comprising: a processor; and a memory, used to store computer-executable instructions which, when executed, cause the processor to perform the method in the first embodiment.

A fourth embodiment of the present disclosure proposes a computer-readable storage medium, having stored thereon computer-executable instructions for performing the method of the first embodiment.

A fifth embodiment of the present disclosure proposes a computer program product, tangibly stored on a computer-readable storage medium and comprising computer-executable instructions which, when executed, cause at least one processor to perform the method of the first embodiment.

**Brief description of the drawings**

The features, advantages and other aspects of the embodiments of the present disclosure will become more obvious with reference to the following detailed description in conjunction with the drawings. Some embodiments of the present disclosure are disclosed here in an exemplary and non-limiting manner. In the drawings:

Fig. 1 shows a method for a robot to grab a 3D object according to an embodiment of the present disclosure.
Fig. 2 is a diagram of a system architecture for performing the method in Fig. 1 according to an embodiment of the present disclosure.
Fig. 3 shows an operating procedure for grabbing a 3D object using the system of Fig. 2.
Fig. 4 shows a schematic diagram of an Earth model established on the basis of a virtual model of an exemplary 3D object in the system of Fig. 2.
Fig. 5 shows a main view of the Earth model when grabbing points are specified for the virtual model of the exemplary 3D object in Fig. 4.
Fig. 6 shows an apparatus for a robot to grab a 3D object according to an embodiment of the present disclosure; and
Fig. 7 shows a block diagram of a computing device of components for a robot to grab a 3D object according to an embodiment of the present disclosure.

**Detailed description of embodiments**

Exemplary embodiments of the present disclosure are described in detail below with reference to the drawings. Although the exemplary methods and apparatuses described below include software and/or firmware executed on hardware in other components, it should be noted that these examples are merely illustrative and should not be regarded as limiting. For example, it is considered that any or all hardware, software and firmware components can be implemented in hardware exclusively, in software exclusively, or in any combination of hardware and software. Thus, although exemplary methods and apparatuses have already been described below, those skilled in the art should readily understand that the examples provided are not intended to limit the way in which these methods and apparatuses are realized.

Furthermore, the flow charts and block diagrams in the drawings show possible system architectures, functions and operations of the methods and systems according to the embodiments of the present disclosure. It should be noted that the functions marked in the boxes may also occur in a different order from that marked in the drawings. For example, two boxes shown as being linked may in fact be implemented substantially in parallel, or they may also sometimes be implemented in the opposite order, depending on the functions concerned. It should likewise be noted that each box in the flow charts and/or block diagrams, and combinations of boxes in the flow charts and/or block diagrams, may be realized using a dedicated hardware-based system that performs specified functions or operations, or may be realized using a combination of dedicated hardware and computer instructions.

As used herein, the terms "comprising", "including" and similar terms are open terms, i.e. "comprising/including but not limited to", indicating that other content may also be included. The term "based on" is "at least partially based on". The term "an embodiment" means "at least one embodiment"; the term "another embodiment" means "at least one other embodiment", and so on.

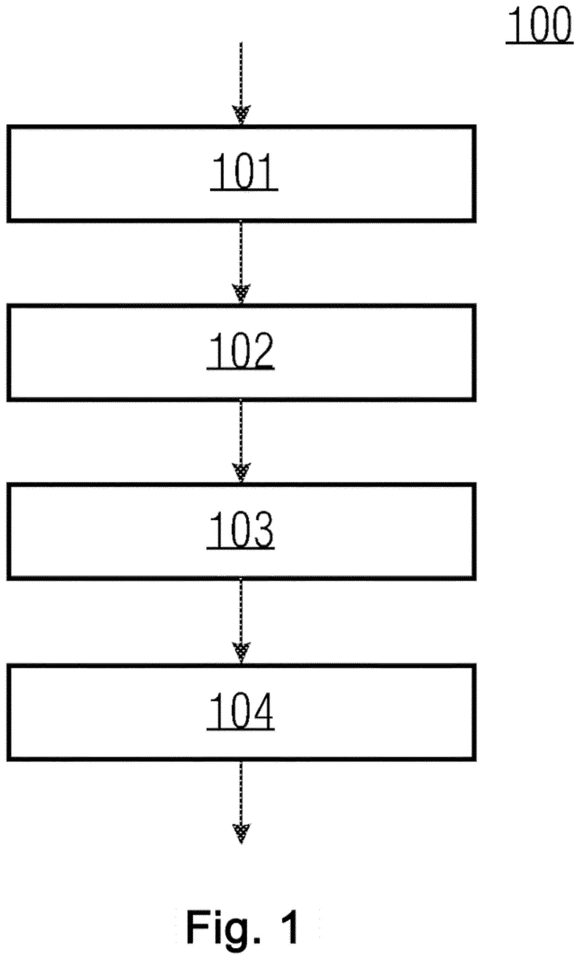

Fig. 1 shows a method for a robot to grab a 3D object according to an embodiment of the present disclosure. The method may be performed by an industrial computer in a factory. Referring to Fig. 1, the method 100 begins at step 101. In step 101, a current position and attitude of a visual sensor of a robot relative to a 3D object is determined. The visual sensor is a 2D visual sensor, for example a 2D camera. In this embodiment, the visual sensor is mounted at an extremity of the robot (e.g. at a gripper of the robot), and moves together with the robot. The current position and attitude of the visual sensor relative to the 3D object represents the relative positions and attitudes of the visual sensor and the 3D object in a current state.

In some embodiments, step 101 further comprises: acquiring a real image of the 3D object at a visual angle of a current position and attitude; acquiring an image template of the 3D object, the image template representing multiple virtual images of a virtual model of the 3D object at visual angles of multiple different positions and attitudes; determining a degree of similarity between the real image and each of the multiple virtual images respectively; and generating the current position and attitude based on a corresponding position and attitude of the virtual image with the highest degree of similarity. A real image of the 3D object at a visual angle of a current position and attitude of a visual sensor may be obtained by means of the visual sensor. Generally, the real image comprises other objects in the environment in addition to the 3D object. In order to determine the current position and attitude of the visual sensor relative to the 3D object, the real image can be matched to the image template of the 3D object. The image template represents multiple virtual images of a virtual model of the 3D object at visual angles of multiple different positions and attitudes of the visual sensor. The image template of the 3D object may be established in advance. In this embodiment, the virtual model of the 3D object is a CAD design model of the 3D object. In a virtual environment, changes in position and attitude of the visual sensor relative to the virtual model of the 3D object are simulated, thereby simulating different relative positions and attitudes of the visual sensor and the 3D object in the real world. It is possible to traverse each position and attitude in a preset range of positions and attitudes, to obtain a virtual image of the virtual model of the 3D object at the visual angle of each position and attitude. The real image of the 3D object is compared with each of multiple virtual images, and the degree of similarity therebetween is determined. The highest degree of similarity may be compared with a preset threshold (e.g. 900 or 950). If the highest degree of similarity exceeds the preset threshold, then the corresponding position and attitude of the virtual image with the highest degree of similarity is taken to be the current position and attitude of the visual sensor relative to the 3D object. The preset range of positions and attitudes and the preset threshold may be set by the user via an input interface such as a touch screen.

In some embodiments, after obtaining a virtual image of the virtual model of the 3D object at the visual angle of each position and attitude, the virtual image is converted to a binary image. Characteristics of the binary image are obtained using HoG (histogram of oriented gradients), and represented by an N-dimensional vector. It will be understood that the N-dimensional vector can represent edge characteristics of the virtual model of the 3D object in the virtual image. These N-dimensional vectors of all of the virtual images, and the corresponding positions and attitudes, are saved in a memory as the image template.

In some embodiments, the step of determining a degree of similarity between the real image and each of the multiple virtual images respectively further comprises: using a Mask-RCNN model to generate a mask of the 3D object based on the real image of the 3D object; and obtaining characteristics of the real image of the 3D object based on the mask of the 3D object. Multiple real image samples of the 3D object may be used in advance to train the Mask-RCNN model. The Mask-RCNN model is able to identify the 3D object in the real image of the 3D object, and generates a mask of the 3D object. The mask of the 3D object is then converted to a binary image. HoG is likewise used to obtain characteristics of the binary image, and edge characteristics of the 3D object in the real image are thereby represented by an N-dimensional vector. Compared with the conventional method of using a real image directly for template matching, if a Mask-RCNN model is used prior to template matching to extract a mask of the 3D object and matching is then performed, the robustness and accuracy of 3D object identification in complex environments can be increased.

In some embodiments, the degree of similarity comprises the degree of similarity between characteristics of the real image and characteristics of each virtual image. The degree of similarity between the N-dimensional vector obtained according to the real image and the N-dimensional vector obtained according to each virtual image is determined. Any similarity computing method in the prior art (e.g. Euclidean distance) may be used to determine the degree of similarity.

Continuing to refer to Fig. 1, in step 102, a grabbing template of the 3D object is acquired, the grabbing template comprising a specified grabbing position and attitude of the visual sensor relative to the 3D object. The specified grabbing position and attitude may be the position and attitude of the visual sensor relative to the 3D object when the robot grabs the 3D object, specified in advance by the user. In the virtual environment, the user may determine the specified grabbing position and attitude by adjusting the position and attitude of the simulated visual sensor relative to the virtual model of the 3D object.

In some embodiments, the method 100 further comprises (not shown in Fig. 1): generating a grabbing template. The grabbing template is used to obtain a grabbing position and attitude of the visual sensor relative to the 3D object when the robot grabs the 3D object. In addition to the specified grabbing position and attitude of the visual sensor relative to the 3D object, the grabbing template may also selectively comprise at least one reference grabbing position and attitude of the visual sensor relative to the 3D object. The reference grabbing position and attitude are another grabbing position and attitude of the visual sensor relative to the 3D object, which are selectable in addition to the specified grabbing position and attitude when the robot grabs the 3D object. The reference grabbing position and attitude may be generated on the basis of the specified grabbing position and attitude. In some embodiments, a specified virtual image of the virtual model of the 3D object at the visual angle of the specified grabbing position and attitude may be used to generate the reference grabbing position and attitude. At the visual angle of the reference grabbing position and attitude, the degree of similarity between a virtual image of the virtual model of the 3D object and the specified virtual image is higher than a preset threshold.

In some embodiments, the step of generating a grabbing template further comprises: acquiring a specified virtual image of the virtual model of the 3D object at the visual angle of the specified grabbing position and attitude; simulating multiple different positions and attitudes of the visual sensor relative to the 3D object, and obtaining multiple virtual images of the virtual model of the 3D object at the visual angles of multiple different positions and attitudes; determining the degree of similarity between each of multiple virtual images and the specified virtual image respectively;

and taking the corresponding position and attitude of a virtual image with a degree of similarity higher than a preset threshold to be the reference grabbing position and attitude.

As stated above, in the virtual environment, the user may determine the specified grabbing position and attitude by adjusting the position and attitude of the simulated visual sensor relative to the virtual model of the 3D object. After determining the specified grabbing position and attitude, a virtual image of the virtual model of the 3D object at the visual angle of the specified grabbing position and attitude is obtained, and taken to be the specified virtual image. The specified virtual image may comprise a 2D projection of the virtual model of the 3D object at the visual angle of the specified grabbing position and attitude. Next, in the virtual environment, the position and attitude of the simulated visual sensor relative to the virtual model of the 3D object are varied, thereby simulating different relative positions and attitudes of the visual sensor and the 3D object in the real world. It is possible to traverse each position and attitude in a preset range of positions and attitudes, to obtain a virtual image of the virtual model of the 3D object at the visual angle of each position and attitude. Each of these virtual images is compared with the specified virtual image, and the degree of similarity therebetween is determined. When the degree of similarity between a particular virtual image and the specified virtual image exceeds a preset threshold (i.e. the difference therebetween is less than some threshold), the corresponding position and attitude of this virtual image are taken to be the reference grabbing position and attitude. As stated above, the preset range of positions and attitudes and the preset threshold may be set by the user via an input interface such as a touch screen.

In some embodiments, the degree of similarity comprises the degree of similarity between characteristics of the virtual image and characteristics of the specified virtual image. As stated above, the virtual image of the virtual model of the 3D object at the visual angle of each position and attitude is converted to a binary image, and characteristics thereof are represented by an N-dimensional vector through HoG. Likewise, the specified virtual image of the virtual model of the 3D object at the visual angle of the specified grabbing position and attitude is converted to a binary image, and characteristics thereof are represented by an N-dimensional vector through HoG. The degree of similarity between the N-dimensional vector obtained according to each virtual image and the N-dimensional vector obtained according to the specified virtual image is determined. Any similarity computing method in the prior art may be used to determine the degree of similarity. The N-dimensional vectors and the corresponding positions and attitudes of all virtual images with a degree of similarity higher than a preset threshold, as well as the N-dimensional vector of the specified virtual image and the specified grabbing position and attitude, are saved in a memory as the grabbing template of the 3D object. When all the degrees of similarity are lower than the preset threshold, only the N-dimensional vector of the specified virtual image and the specified grabbing position and attitude are saved in the memory as the grabbing template of the 3D object.

Next, in step 103, a judgment is made as to whether the grabbing template further comprises at least one reference grabbing position and attitude of the visual sensor relative to the 3D object, wherein the reference grabbing position and attitude are generated on the basis of the specified grabbing position and attitude. As stated above, when the grabbing template is generated, the specified virtual image of the virtual model of the 3D object at the visual angle of the specified grabbing position and attitude and the virtual image at the visual angle of the reference grabbing position and attitude are similar. Likewise, when grabbing is performed, an image of the 3D object at the visual angle of the specified grabbing position and attitude and an image at the visual angle of the reference grabbing position and attitude will also be similar. Thus, when the grabbing template comprises a reference grabbing position and attitude of the visual sensor relative to the 3D object, the reference grabbing position and attitude can be used to generate a grabbing position and attitude of the robot, thereby optimizing a path of the robot from the current position and attitude thereof to the grabbing position and attitude.

In step 104, based on the judgment result, the grabbing template and the current position and attitude are used to generate the grabbing position and attitude of the robot. The specified grabbing position and attitude and the reference grabbing position and attitude are positions and attitudes of the visual sensor relative to the 3D object. To enable the robot to grab the 3D object, it is necessary to first generate a target grabbing position and attitude of the visual sensor relative to the 3D object, and then convert these to the grabbing position and attitude of the robot.

In some embodiments, the step of using the grabbing template and the current position and attitude to generate the grabbing position and attitude of the robot, based on the judgment result, further comprises: based on the judgment result, using the grabbing template and the current position and attitude to determine a target grabbing position and attitude of the visual sensor relative to the 3D object; and converting the target grabbing position and attitude to the grabbing position and attitude of the robot by hand-eye calibration. The target grabbing position and attitude of the visual sensor relative to the 3D object may be converted to the grabbing position and attitude of the robot by any hand-eye calibration method in the prior art. It is also possible to further convert the grabbing position and attitude of the robot to a position and attitude of the 3D object in a robot coordinate system, so that the robot grabs the 3D object.

In some embodiments, the step of using the grabbing template and the current position and attitude to determine a target position and attitude of the visual sensor relative to the 3D object, based on the judgment result, further comprises: when the grabbing template further comprises at least one reference grabbing position and attitude, determining the grabbing position and attitude with the shortest movement distance from the current position and attitude in the grabbing template, to serve as the target grabbing position and attitude; and when the grabbing template does not comprise a reference grabbing position and attitude, taking the specified grabbing position and attitude to be the target grabbing position and attitude. If the grabbing template comprises at least one reference grabbing position and attitude, this indicates that another grabbing position and attitude similar to the specified grabbing position and attitude exists. In this case, the grabbing position and attitude with the shortest movement distance are determined on the basis of the current position and attitude, wherein this grabbing position and attitude may be one of the at least one reference grabbing position and attitude and the specified grabbing position and attitude. The grabbing position and attitude with the shortest movement distance from the current position and attitude are determined by computing the distance between the location of the current position and attitude and the location of each grabbing position and attitude in the grabbing template. The distance may be computed by any distance computing method in the prior art. The grabbing position and attitude with the shortest movement distance from the current position and attitude are taken to be the target grabbing position and attitude. When the grabbing template does not comprise a reference grabbing position and attitude, this indicates that there is no other grabbing position and attitude similar to the specified grabbing position and attitude. In this case, the specified grabbing position and attitude are taken directly to be the target grabbing position and attitude.

In some embodiments, the method 100 further comprises (not shown in Fig. 1): establishing an Earth model, with a specified grabbing point on the virtual model of the 3D object as a sphere center; the current position and attitude, the specified grabbing position and attitude and the reference grabbing position and attitude are represented by position and attitude parameters in the Earth model. The virtual model of the 3D object and the sphere of the Earth model may be provided to the user via a display interface. A view at the visual angle of the visual sensor is set as a main view of the Earth model and provided to the user. The user is able to subject the virtual model of the 3D object to operations such as dragging, translation and rotation on the main view in order to specify grabbing positions located on two edges of the virtual model of the 3D object; a center point of the grabbing positions is a grabbing point. The grabbing point is taken to be the sphere center of the Earth model. At this time, the relative attitudes of the simulated visual sensor and the virtual model of the 3D object have been determined. Points of intersection between the profile of the virtual model of the 3D object and a plane passing through the sphere center at the current visual angle are two-finger grabbing positions of the robot. Next, a side view of the Earth model is provided to the user; the user can adjust a grabbing depth on the side view, i.e. a distance between the simulated visual sensor and the grabbing point. In this way, the relative positions and attitudes of the 3D object and the visual sensor when grabbing the 3D object have been specified. The position and attitude of the simulated visual sensor at this time relative to the virtual model of the 3D object are taken to be the specified grabbing position and attitude. In the Earth model, the position and attitude may be represented using four parameters: latitude, longitude, depth and yaw angle. Using the position and attitude parameters in the Earth model, it is possible to accurately describe the relative positions and attitudes of the visual sensor and the 3D object, so compared with a conventional method of using six parameters to represent the position and attitude, the data storage amount and computation amount are reduced, and the grabbing speed is increased.

In the embodiment above, by judging whether the preset grabbing template comprises a reference grabbing position and attitude of the 3D object to be grabbed, it is possible, when the grabbing template comprises a reference grabbing position and attitude, to use the reference grabbing position and attitude to optimize a movement path of the robot from the current position and attitude to the grabbing position and attitude, so the grabbing flexibility is increased, the grabbing speed and efficiency are increased, and energy is saved. In addition, the method is simple and easy to perform, the data computation amount is small, and there is no need for an expensive 3D camera, so time is saved and the economic cost is reduced. In the case where a CAD design model of the 3D object is used as the virtual model, the image template and the grabbing template both come from the CAD design model, so the estimation of the current position and attitude and the acquisition of the grabbing position and attitude are more reliable and accurate. Moreover, using the Mask-RCNN model to extract a mask of the 3D object and then performing matching makes it possible to increase the robustness and accuracy of 3D object identification in complex environments. The use of position and attitude parameters in the Earth model makes it possible to accurately describe the relative positions and attitudes of the visual sensor and the 3D object, reducing the data storage amount and computation amount and increasing the grabbing speed.

The method in Fig. 1 for a robot to grab a 3D object is explained below with reference to a particular embodiment.

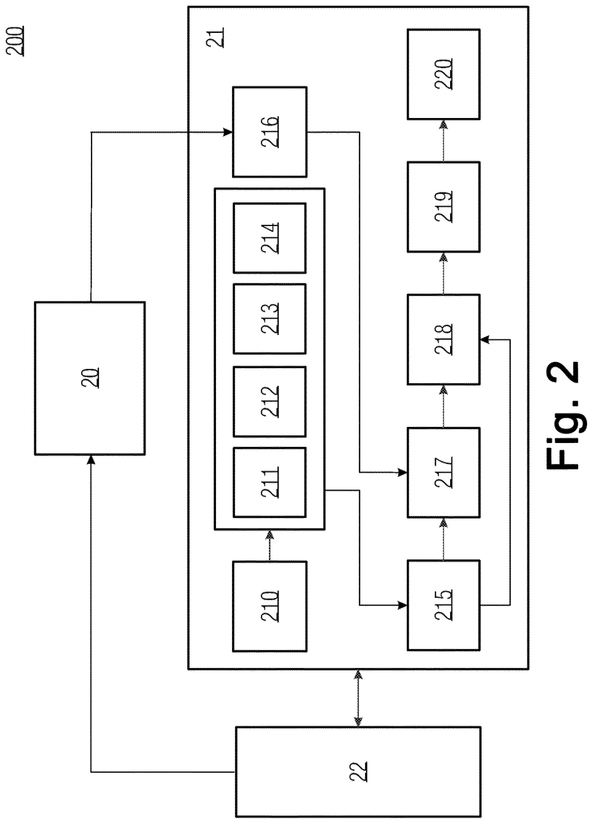

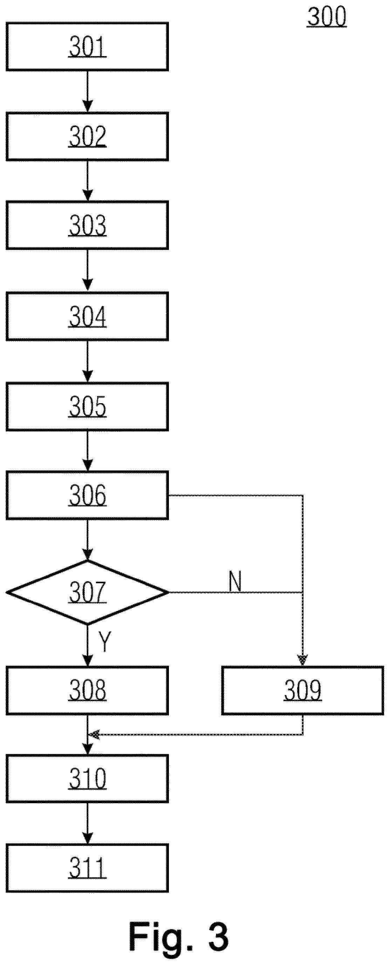

This embodiment is explained by referring to Figs. 2 - 5 together. Fig. 2 shows a diagram of a system architecture for performing the method in Fig. 1 according to an embodiment of the present disclosure. Fig. 3 shows an operating procedure for grabbing a 3D object using the system of Fig. 2. In Fig. 2, the system 200 comprises a camera 20, an industrial computer 21, a touch screen 22 and a robot (not shown in Fig. 2). The camera 20 is a 2D camera, which is mounted at an extremity of a robot, and used to capture a real image containing a 3D object. The industrial computer 21 comprises a parameter adjustment module 210, a virtual model importing module 211, an Earth model establishing module 212, an image template generating module 213, a grabbing template generating module 214, a data memory 215, an object detection module 216, a template matching module 217, a grab generating module 218, a parameter conversion module 219 and a hand-eye calibration module 220. The virtual model importing module 211, Earth model establishing module 212, image template generating module 213 and grabbing template generating module 214 together form a template generating module. Through the touch screen 22, the user can input a range of positions and attitudes of the camera 20 relative to the 3D object as well as a first threshold and a second threshold for similarity comparison; these parameters may be provided to the template generating module via the parameter adjustment module 210. The touch screen 22 may also provide a display interface for the industrial computer 21; the virtual model of the 3D object, the result of identifying the 3D object in the real image and other information may be displayed via the display interface.

In this embodiment, the parameter adjustment module 210, virtual model importing module 211, Earth model establishing module 212, image template generating module 213, grabbing template generating module 214, data memory 215, object detection module 216, template matching module 217, grab generating module 218, parameter conversion module 219 and hand-eye calibration module 220 are all integrated in the industrial computer 21, and the touch screen 22 is located outside the industrial computer 21. In other embodiments, these modules in the industrial computer 21 may be separately located on different computing devices. For example, the entire template generating module may be located on another computing device. In other embodiments, the touch screen 22 may be part of the industrial computer 21.

In the operating procedure 300 of Fig. 3, step 301 comprises the user importing a virtual model of the 3D object to be grabbed via the virtual model importing module 211. In this embodiment, the virtual model of the 3D object is a CAD design model of the 3D object. The virtual model of the 3D object may be imported via a network interface or hardware interface.

In step 302, the Earth model establishing module 212 establishes an Earth model. Through the touch screen 22, the user inputs a range of variation of distance between the camera 20 and the 3D object. This range of variation of distance may be an operating range of the camera 20. The Earth model establishing module 212 provides a virtual model of the 3D object and a sphere with any value in the operating range as a radius, and displays these to the user via the touch screen 22.

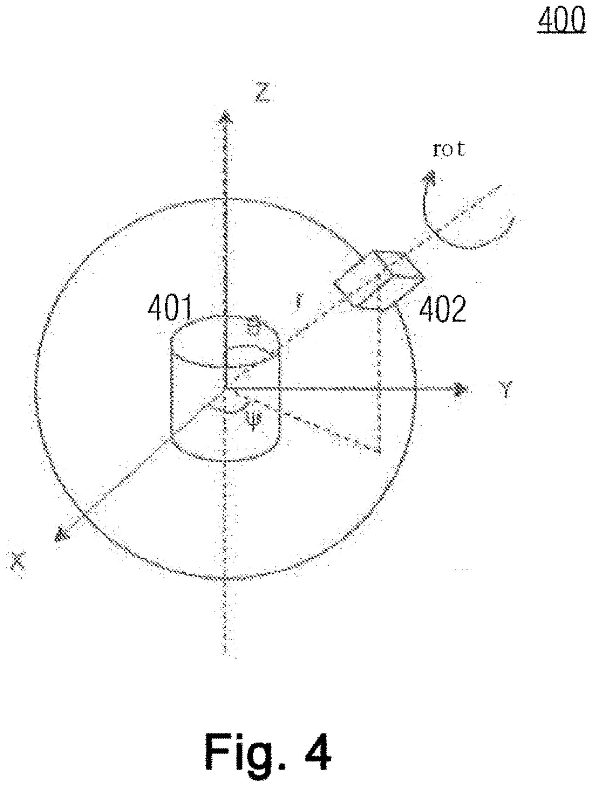

Fig. 4 shows a schematic diagram of an Earth model established on the basis of a virtual model of an exemplary 3D object in the system of Fig. 2. As can be seen in Fig. 4, a virtual model 401 of a 3D object is located in a sphere, a virtual camera 402 is located on the surface of the sphere, and the visual angle thereof is towards the virtual model 401. The equatorial plane of the sphere is set as the horizontal plane (XY) of the Earth model 400, and the longitudinal axis of the sphere is set as the Z axis of the Earth model 400. Next, the sphere center and radius of the Earth model are specified by the user. The Earth model establishing module 212 sets the main view of the Earth model 400 as the view at the visual angle of the virtual camera 402, and the main view of the Earth model 400 is displayed to the user via the touch screen 22.

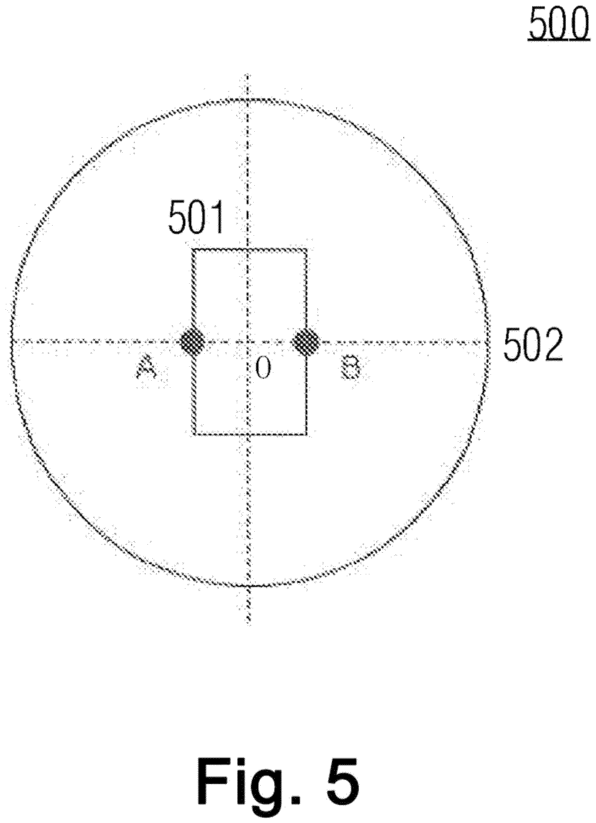

Fig. 5 shows a main view of the Earth model when grabbing points are specified for the virtual model of the exemplary 3D object in Fig. 4. At the visual angle of the virtual camera 402, the user can subject the virtual model 401 of the 3D object to operations such as dragging, translation and rotation on the main view 500 in order to specify grabbing positions on the virtual model 401 of the 3D object. In this embodiment, the robot is a two-finger robot, and two points of intersection between the profile of the virtual model 401 of the 3D object and a plane 502 passing through the sphere center at the current visual angle are grabbing positions of the robot. In the example of Fig. 5, the grabbing positions specified by the user are intersection points A and B; the center O of these is the grabbing point, which is taken to be the sphere center of the Earth model. At this time, the relative attitudes of the virtual camera 402 and the virtual model 401 of the 3D object, i.e. the relative attitudes of the camera 20 and the 3D object when the robot grabs the 3D object, have been determined.

When the grabbing point has been confirmed, the main view switches to a side view of the Earth model; the side view is set as a view in a direction perpendicular to the visual angle of the virtual camera 402. On the side view, the user can adjust the distance between the virtual camera 402 and the grabbing point (i.e. the sphere center), i.e. the grabbing depth when the robot grabs the 3D object. In this way, the relative positions and attitudes of the 3D object and the camera 20 when grabbing the 3D object have been specified. The position and attitude of the virtual camera 402 at this time relative to the virtual model 401 of the 3D object are taken to be the specified grabbing position and attitude. As shown in Fig. 4, in the Earth model 400, $\theta$ is the angle between the virtual camera 402 and the Z axis, and may be used to represent latitude; $\Psi$ is the angle between the projection point of the virtual camera 402 on the XY plane and the X axis, and may be used to represent longitude; r is the distance between the virtual camera 402 and the grabbing point, and may be used represent grabbing depth; rot is the angle of rotation of the virtual camera 402 around its optical axis (a line connecting the center thereof and the sphere center), and may be used to represent yaw angle. Thus, the position and attitude of the virtual camera 402 may be represented using four parameters: latitude, longitude, depth and yaw angle ($\theta$, $\Psi$, r, rot). In addition, the specified virtual image comprises a 2D projection 501 of the virtual model 401 of the 3D object at the visual angle of the specified grabbing position and attitude of the camera 20, as shown in Fig. 5. In the above steps, the user has determined the specified grabbing position and attitude of the camera 20 relative to the 3D object when the robot grabs the 3D object, and the specified virtual image 501 of the virtual model 401 of the 3D object at the visual angle of the specified grabbing position and attitude. Next, the specified virtual image is converted to a binary image. In the binary image, a region where the virtual model 401 of the 3D object is located (i.e. a 2D projection) is white, and a remaining region is black. Characteristics of the binary image are extracted by HoG (histogram of oriented gradients), and represented by an N-dimensional vector. It will be understood that the N-dimensional vector represents edge characteristics of the virtual model 401 of the 3D object in the virtual image. The specified grabbing position and attitude represented using position and attitude parameters in the Earth model, and the corresponding N-dimensional vector, are then saved in the data memory 215.

Next, in step 303 of the operating procedure 300, the image template generating module 213 generates an image template of the 3D object. Through the touch screen 22, the user can input to the parameter adjustment module 210 a range of positions and attitudes of the virtual camera 402 relative to the virtual model 401 of the 3D object, to serve as a preset range of positions and attitudes. The user may set the range of positions and attitudes according to the actual circumstances (e.g. symmetry) of the 3D object. As stated above, the position and attitude may be represented using four parameters: latitude, longitude, depth and yaw angle ($\theta$, $\Psi$, r, rot). The range of positions and attitudes may comprise a range of values of each of the parameters latitude, longitude, depth and yaw angle ($\theta$, $\Psi$, r, rot). In addition, the user may also set a step length of variation of each parameter in the range of values according to actual needs. A change in any of these four parameters will produce a new position and attitude. The image template generating module 213 traverses each position and attitude in the preset range of positions and attitudes of the virtual camera 402 relative to the virtual model 401 of the 3D object, and obtains a virtual image of the virtual model 401 of the 3D object at the visual angle of each position and attitude. The virtual image comprises a 2D projection of the virtual model 401 of the 3D object at this visual angle. Likewise, each virtual image is converted to a binary image, characteristics of the binary image are extracted by HoG, and the characteristics are represented by an N-dimensional vector. All of the N-dimensional vectors and the corresponding positions and attitudes are then saved in the data memory 215 as an image template.

In step 304, the grabbing template generating module 214 generates a grabbing template of the 3D object. The grabbing template generating module 214 compares each N-dimensional vector generated in step 303 with the N-dimensional vector generated in step 302, and determines the degree of similarity therebetween. When the degree of similarity between a particular N-dimensional vector generated in step 303 and the N-dimensional vector generated in step 302 exceeds the first threshold, the position and attitude corresponding to this N-dimensional vector are taken to be a reference grabbing position and attitude. All reference grabbing positions and attitudes and the corresponding N-dimensional vectors, as well as the specified grabbing position and attitude and the corresponding N-dimensional vector, are saved in the data memory 215 as the grabbing template of the 3D object. When the degrees of similarity of all N-dimensional vectors generated in step 303 with respect to the N-dimensional vector generated in step 302 are all lower than the first threshold, this indicates that there is no other grabbing position and attitude similar to the grabbing position and attitude specified by the user. In this case, the grabbing template only comprises the specified grabbing position and attitude and the corresponding N-dimensional vector. To increase the computing speed, step 304 is performed after each operation of moving to a new position and attitude and obtaining the N-dimensional vector at the visual angle of this new position and attitude in step 303.

If multiple 3D objects need to be grabbed, steps 301 - 304 are performed for each 3D object, and the generated image templates and grabbing templates are saved in the data memory 215.

In step 305, the object detection module 216 receives a real image of the 3D object to be grabbed from the camera 20, identifies the 3D object in the real image and generates a mask of the 3D image. The user may, via the touch screen 22, activate the camera 20 to photograph the 3D object to be grabbed. In the object detection module 216, a pre-trained Mask-RCNN model is used to identify the 3D object in the real image and generate a mask of the 3D object. Next, the mask is converted to a binary image, and HoG is likewise used to generate an N-dimensional vector, to represent characteristics of the binary image. In other embodiments, a Mask-RCNN model may also be trained in the object detection module 216 in advance, and saved in the data memory 215, to be read for use subsequently.

In step 306, the template matching module 217 reads the image template from the data memory 215, and determines the degree of similarity between the N-dimensional vector generated in step 305 (i.e. the N-dimensional vector of the real image) and each N-dimensional vector in the image template. A highest degree of similarity is determined from amongst these degrees of similarity, and compared with the second threshold inputted by the user. If there is a highest degree of similarity between the N-dimensional vector of the real image and a particular N-dimensional vector in the image template, and this highest degree of similarity exceeds the second threshold, this indicates that the real image of the 3D object matches the virtual image corresponding to this N-dimensional vector. The corresponding position and attitude of this virtual image are taken to be the current position and attitude of the camera 20 relative to the 3D object. If this highest degree of similarity is lower than the second threshold, this indicates that the real image of the 3D object cannot be matched to a particular virtual image. In this case, the method moves to step 309: the grab generating module 218 takes the specified grabbing position and attitude in the grabbing template to be the target grabbing position and attitude of the camera 20.

After determining the current position and attitude of the camera 20 relative to the 3D object, the operating procedure 300 proceeds to step 307. In step 307, the grab generating module 218 reads the grabbing template from the data memory 215, and judges whether the grabbing template comprises a reference grabbing position and attitude of the camera 20 relative to the 3D object. When the grabbing template comprises a reference grabbing position and attitude, in step 308, the grabbing template generating module 214 computes a movement distance from the location of the current position and attitude to the location of each grabbing position and attitude in the grabbing template, and takes the grabbing position and attitude with the shortest movement distance from the current position and attitude to be the target grabbing position and attitude of the camera 20 relative to the 3D object. The grabbing position and attitude with the shortest movement distance from the current position and attitude may be the specified grabbing position and attitude or a reference grabbing position and attitude. In this embodiment, the grabbing position and attitude with the shortest movement distance from the current position and attitude is determined by computing Euclidean distance. When the grabbing template does not comprise a reference grabbing position and attitude, the method proceeds to step 309. In step 309, the grab generating module 218 takes the specified grabbing position and attitude in the grabbing template to be the target grabbing position and attitude of the camera 20.

Next, in step 310, the parameter conversion module 219 converts the target grabbing position and attitude represented using the four parameters latitude, longitude, depth and yaw angle ($\theta$, $\Psi$, r, rot) to six parameters that the robot is able to identify: x, y, z, roll angle, pitch angle and yaw angle. When conversion is performed, based on the Earth model in Fig. 4, the values of x, y and z may be represented using r, $\theta$ and $\Psi$ in formula (1):

$$\begin{bmatrix} x \\ y \\ z \end{bmatrix} = \begin{bmatrix} r \cdot sin\theta \cdot cos\Psi \\ r \cdot sin\theta \cdot sin\Psi \\ r \cdot cos\theta \end{bmatrix} \qquad (1)$$

Based on the Earth model in Fig. 4, rot has the same definition as yaw angle, representing rotation about a Z axis in a camera coordinate system, so formula (2) is obtained:

$$[yaw] = [rot] \qquad (2)$$

Furthermore, the direction of the Z axis in the camera coordinate system points towards the origin of the world coordinate system of the Earth model, so the vector [0,0,1] in the camera coordinate system can be converted to $\left[ -\frac{x}{r}, -\frac{y}{r}, -\frac{z}{r} \right]$ in the world coordinate system. The order of rotation of the Euler angles is set as X-Y-Z, so formula (3) is obtained:

$$\begin{bmatrix} -\frac{x}{r} \\ -\frac{y}{r} \\ -\frac{z}{r} \end{bmatrix} = Rx\ Ry\ Rz \begin{bmatrix} 0 \\ 0 \\ 1 \end{bmatrix} \qquad (3)$$

where

$$Rx = \begin{bmatrix} 1 & 0 & 0 \\ 0 & cos\ (roll) & -sin\ (roll) \\ 0 & sin\ (roll) & cos\ (roll) \end{bmatrix}, \quad Ry = \begin{bmatrix} cos\ (pitch) & 0 & sin\ (pitch) \\ 0 & 1 & 0 \\ -sin\ (pitch) & 0 & cos\ (pitch) \end{bmatrix}, \quad Rz = \begin{bmatrix} cos\ (yaw) & -sin\ (yaw) & 0 \\ sin\ (yaw) & cos\ (yaw) & 0 \\ 0 & 0 & 1 \end{bmatrix},$$

EP 4 166 281 A1

and the roll angle and pitch angle can be computed:

$$\begin{bmatrix} \text{roll} \\ \text{picth} \end{bmatrix} = \begin{bmatrix} \tan^{-1}\frac{y}{z} \\ -\sin^{-1}\frac{x}{r} \end{bmatrix} = \begin{bmatrix} \theta \\ -\sin^{-1}(\sin\theta \cdot \cos\Psi) \end{bmatrix} \qquad (4)$$

Thus, parameter conversion can be performed finally according to formula (5) below:

$$\begin{bmatrix} x \\ y \\ z \\ \text{roll} \\ \text{pitch} \\ \text{yaw} \end{bmatrix} = \begin{bmatrix} r \cdot \sin\theta \cdot \cos\Psi \\ r \cdot \sin\theta \cdot \sin\Psi \\ r \cdot \cos\theta \\ \theta \\ -\sin^{-1}(\sin\theta \cdot \cos\Psi) \\ \text{rot} \end{bmatrix} \qquad (5)$$

In step 311, the hand-eye calibration module 220 converts the target grabbing position and attitude of the camera 20 relative to the 3D object to the grabbing position and attitude of the robot. After obtaining the grabbing position and attitude of the robot, the grabbing position and attitude of the robot are further converted to a position and attitude of the 3D object in the robot coordinate system, which are then sent to a controller of the robot, to control the robot to grab the 3D object.

In the embodiment above, by judging whether the preset grabbing template comprises a reference grabbing position and attitude of the 3D object to be grabbed, it is possible, when the grabbing template comprises a reference grabbing position and attitude, to use the reference grabbing position and attitude to optimize a movement path of the robot from the current position and attitude to the grabbing position and attitude, so the grabbing flexibility is increased, the grabbing speed and efficiency are increased, and energy is saved. In addition, the method is simple and easy to perform, the data computation amount is small, and there is no need for an expensive 3D camera, so time is saved and the economic cost is reduced. In the case where a CAD design model of the 3D object is used as the virtual model, the image template and the grabbing template both come from the CAD design model, so the estimation of the current position and attitude and the acquisition of the grabbing position and attitude are more reliable and accurate. Moreover, using the Mask-RCNN model to extract a mask of the 3D object and then performing matching makes it possible to increase the robustness and accuracy of 3D object identification in complex environments. The use of position and attitude parameters in the Earth model makes it possible to accurately describe the relative positions and attitudes of the visual sensor and the 3D object, reducing the data storage amount and computation amount and increasing the grabbing speed.

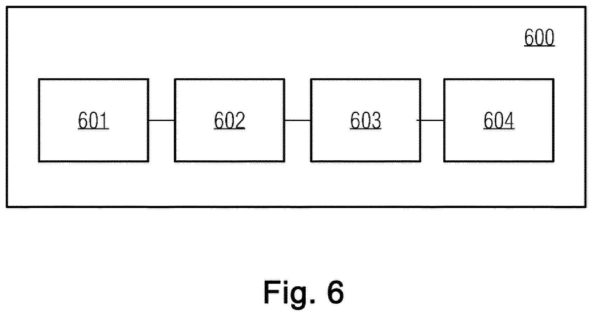

Fig. 6 shows an apparatus for checking an assembly assembled in a production line according to an embodiment of the present disclosure. Referring to Fig. 6, the apparatus 600 comprises a current position and attitude determining unit 601, a grabbing template acquisition unit 602, a reference position and attitude judgment unit 603 and a grabbing position and attitude generating unit 604. The current position and attitude determining unit 601 is configured to determine a current position and attitude of a visual sensor of a robot relative to a 3D object. The grabbing template acquisition unit 602 is configured to acquire a grabbing template of the 3D object, the grabbing template comprising a specified grabbing position and attitude of the visual sensor relative to the 3D object. The reference position and attitude judgment unit 603 is configured to judge whether the grabbing template further comprises at least one reference grabbing position and attitude of the visual sensor relative to the 3D object, wherein the reference grabbing position and attitude are generated on the basis of the specified grabbing position and attitude. The grabbing position and attitude generating unit 604 is configured to use the grabbing template and the current position and attitude to generate a grabbing position and attitude of the robot, based on the judgment result.

Each unit in Fig. 6 may be realized using software, hardware (e.g. an integrated circuit, FPGA, etc.) or a combination of software and hardware.

In some embodiments, the grabbing position and attitude generating unit 604 further comprises (not shown in Fig. 6): a target position and attitude determining unit, configured to use the grabbing template and the current position and attitude to determine a target grabbing position and attitude of the visual sensor relative to the 3D object, based on the judgment result; and a hand-eye calibration unit, configured to convert the target grabbing position and attitude to the grabbing position and attitude of the robot by hand-eye calibration.

In some embodiments, the target position and attitude determining unit is further configured to: when the grabbing template further comprises at least one reference grabbing position and attitude, determine the grabbing position and attitude with the shortest movement distance from the current position and attitude in the grabbing template, to serve as the target grabbing position and attitude; and when the grabbing template does not comprise a reference grabbing position and attitude, take the specified grabbing position and attitude to be the target grabbing position and attitude.

In some embodiments, the apparatus 600 further comprises (not shown in Fig. 6): a grabbing template generating unit, configured to generate a grabbing template.

In some embodiments, the grabbing template generating unit further comprises: a specified image acquisition unit, configured to acquire a specified virtual image of a virtual model of the 3D object at the visual angle of the specified grabbing position and attitude; a virtual image acquisition unit, configured to simulate multiple different positions and attitudes of the visual sensor relative to the 3D object, and obtain multiple virtual images of the virtual model of the 3D object at visual angles of multiple different positions and attitudes; a virtual image comparison unit, configured to determine a degree of similarity between each of multiple virtual images and the specified virtual image respectively; and a reference position and attitude saving unit, configured to save a corresponding position and attitude of a virtual image with a degree of similarity exceeding a preset threshold in the grabbing template as a reference grabbing position and attitude.

In some embodiments, the degree of similarity comprises a degree of similarity between a characteristic of the virtual image and a characteristic of the specified virtual image.

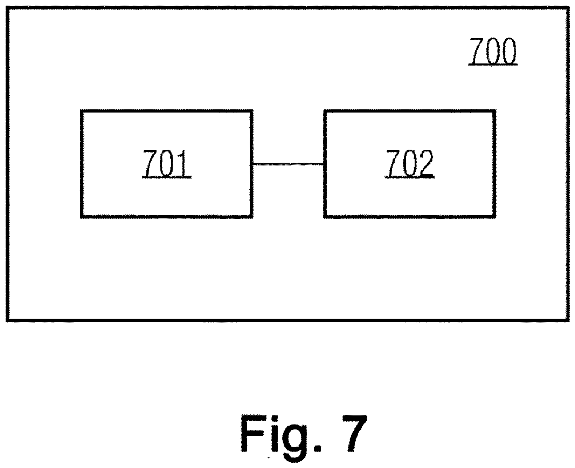

In some embodiments, the current position and attitude determining unit further comprises (not shown in Fig. 7): a real image acquisition unit, configured to acquire a real image of the 3D object at the visual angle of a current position and attitude; an image template acquisition unit, configured to acquire an image template of the 3D object, the image template representing multiple virtual images of the virtual model of the 3D object at visual angles of multiple different positions and attitudes; a real image comparison unit, configured to determine a degree of similarity between the real image and each of multiple virtual images respectively; and a current position and attitude generating unit, configured to generate a current position and attitude based on a corresponding position and attitude of the virtual image with the highest degree of similarity.

In some embodiments, the real image comparison unit is further configured to: use a Mask-RCNN model to identify the 3D object in the real image and generate a mask of the 3D object; and obtain a characteristic of the real image based on the mask of the 3D object.

In some embodiments, the degree of similarity comprises a degree of similarity between a characteristic of the real image and a characteristic of each virtual image.

In some embodiments, the apparatus 600 further comprises (not shown in Fig. 6): an Earth model establishing unit, configured to establish an Earth model with a specified grabbing point on the virtual model of the 3D object as a sphere center; the current position and attitude, the specified grabbing position and attitude and the reference grabbing position and attitude are represented by position and attitude parameters in the Earth model.

Fig. 7 shows a block diagram of a computing device for checking an assembly assembled in a production line according to an embodiment of the present disclosure. It can be seen from Fig. 7 that a computing device 700 for maintaining field equipment in a factory comprises a processor 701 and a memory 702 coupled to the processor 701. The memory 702 is used to store computer-executable instructions which, when executed, cause the processor 701 to perform the method in the above embodiments.

In addition, alternatively, the method described above may be realized by means of a computer-readable storage medium. The computer-readable storage medium carries computer-readable program instructions for implementing the embodiments of the present disclosure. The computer-readable storage medium may be a tangible device capable of holding and storing instructions used by an instruction execution device. The computer-readable storage medium may for example be, but is not limited to, an electrical storage device, a magnetic storage device, an optical storage device, an electromagnetic storage device, a semiconductor storage device or any suitable combination of the above. More specific examples of computer-readable storage media (a non-exhaustive list) include: a portable computer disk, hard disk, random access memory (RAM), read-only memory (ROM), erasable programmable read-only memory (EPROM or flash memory), static random access memory (SRAM), portable compact disk read-only memory (CD-ROM), digital versatile disk (DVD), memory stick, floppy disk, mechanical coding device, for example a punched card with instructions stored thereon or a protrusion-in-groove structure, and any suitable combinations of the above. The computer-readable storage medium used here is not understood to be the momentary signal itself, such as radio waves or other freely propagating electromagnetic waves, electromagnetic waves propagating through a waveguide or other transmission medium (e.g. light pulses through an optic fiber cable), or electrical signals transmitted through electric wires.

Thus, in another embodiment, the present disclosure proposes a computer-readable storage medium having computer-executable instructions stored thereon, the computer-executable instructions being used to perform the method in the embodiments of the present disclosure.

In another embodiment, the present disclosure proposes a computer program product, which is tangibly stored on a computer-readable storage medium and comprises computer-executable instructions which, when executed, cause at least one processor to perform the method in the embodiments of the present disclosure.

In general, the exemplary embodiments of the present disclosure may be implemented in hardware or dedicated circuitry, software, firmware, logic, or any combination thereof. Some aspects may be implemented in hardware, and other aspects may be implemented in firmware or software executable by a controller, microprocessor or other computing device. When aspects of embodiments of the present disclosure are illustrated or described as a block diagram or flow chart or represented using other graphical forms, it will be understood that the boxes, apparatuses, systems, techniques or methods described here may be implemented as non-limiting examples in hardware, software, firmware, dedicated circuitry or logic, general-purpose hardware or controllers or other computing devices, or combinations thereof.

The computer-readable program instructions or computer program product used to implement the embodiments of the present disclosure may also be stored in the cloud; when they need to be called, the user can access the computer-readable program instructions stored in the cloud and used to implement an embodiment of the present disclosure by means of mobile internet, a fixed network or another network, and thereby implement the technical solution disclosed in accordance with the embodiments of the present disclosure.

Although the embodiments of the present disclosure have been described with reference to a number of specific embodiments, it should be understood that the embodiments of the present disclosure are not limited to the specific embodiments disclosed. The embodiments of the present disclosure are intended to encompass various amendments and equivalent arrangements included in the spirit and scope of the attached claims. The scope of the claims corresponds to the broadest interpretation, and thus includes all such amendments and equivalent structures and functions.

**Claims**

1. A method for a robot to grab a 3D object, comprising:

   determining a current position and attitude of a visual sensor of the robot relative to the 3D object;
   acquiring a grabbing template of the 3D object, the grabbing template comprising a specified grabbing position and attitude of the visual sensor relative to the 3D object;
   judging whether the grabbing template further comprises at least one reference grabbing position and attitude of the visual sensor relative to the 3D object, wherein the reference grabbing position and attitude is generated on the basis of the specified grabbing position and attitude; and
   based on a judgment result, using the grabbing template and the current position and attitude to generate a grabbing position and attitude of the robot.

2. The method as claimed in claim 1, wherein the step of using the grabbing template and the current position and attitude to generate a grabbing position and attitude of the robot, based on a judgment result, further comprises:

   based on the judgment result, using the grabbing template and the current position and attitude to determine a target grabbing position and attitude of the visual sensor relative to the 3D object; and
   converting the target grabbing position and attitude to the grabbing position and attitude of the robot by hand-eye calibration.

3. The method as claimed in claim 2, wherein the step of using the grabbing template and the current position and attitude to determine a target position and attitude of the visual sensor relative to the 3D object, based on the judgment result, further comprises:

   when the grabbing template further comprises at least one said reference grabbing position and attitude, determining a grabbing position and attitude with the shortest movement distance from the current position and attitude in the grabbing template, to serve as the target grabbing position and attitude; and
   when the grabbing template does not comprise the reference grabbing position and attitude, taking the specified grabbing position and attitude to be the target grabbing position and attitude.

4. The method as claimed in claim 1, further comprising:
   generating the grabbing template.

5. The method as claimed in claim 4, wherein the step of generating the grabbing template further comprises:

acquiring a specified virtual image of a virtual model of the 3D object at a visual angle of the specified grabbing position and attitude;

simulating multiple different positions and attitudes of the visual sensor relative to the 3D object, and obtaining multiple virtual images of the virtual model of the 3D object at visual angles of the multiple different positions and attitudes;

determining a degree of similarity between each of the multiple virtual images and the specified virtual image respectively; and

taking a corresponding position and attitude of a virtual image with a degree of similarity higher than a preset threshold to be the reference grabbing position and attitude.

6. The method as claimed in claim 5, wherein the degree of similarity comprises a degree of similarity between a characteristic of the virtual image and a characteristic of the specified virtual image.

7. The method as claimed in claim 1, wherein the step of determining a current position and attitude of a visual sensor of the robot relative to the 3D object further comprises:

acquiring a real image of the 3D object at a visual angle of a current position and attitude;

acquiring an image template of the 3D object, the image template representing multiple virtual images of a virtual model of the 3D object at visual angles of multiple different positions and attitudes;

determining a degree of similarity between the real image and each of the multiple virtual images respectively; and generating the current position and attitude based on a corresponding position and attitude of a virtual image with the highest degree of similarity.

8. The method as claimed in claim 7, wherein the step of determining a degree of similarity between the real image and each of the multiple virtual images respectively further comprises:

using a Mask-RCNN model to generate a mask of the 3D object based on the real image of the 3D object; and obtaining a characteristic of the real image of the 3D object based on the mask of the 3D object.

9. The method as claimed in claim 8, wherein the degree of similarity comprises a degree of similarity between the characteristic of the real image and a characteristic of the virtual image.

10. The method as claimed in claim 1, further comprising:
establishing an Earth model with a specified grabbing point on a virtual model of the 3D object as a sphere center, wherein the current position and attitude, the specified grabbing position and attitude and the reference grabbing position and attitude are represented by position and attitude parameters in the Earth model.

11. An apparatus for a robot to grab a 3D object, comprising:

a current position and attitude determining unit, configured to determine a current position and attitude of a visual sensor of the robot relative to the 3D object;

a grabbing template acquisition unit, configured to acquire a grabbing template of the 3D object, the grabbing template comprising a specified grabbing position and attitude of the visual sensor relative to the 3D object;

a reference position and attitude judgment unit, configured to judge whether the grabbing template further comprises at least one reference grabbing position and attitude of the visual sensor relative to the 3D object, wherein the reference grabbing position and attitude is generated on the basis of the specified grabbing position and attitude; and

a grabbing position and attitude generating unit, configured to use the grabbing template and the current position and attitude to generate a grabbing position and attitude of the robot, based on a judgment result.

12. The apparatus as claimed in claim 11, wherein the grabbing position and attitude generating unit further comprises:

a target position and attitude determining unit, configured to use the grabbing template and the current position and attitude to determine a target grabbing position and attitude of the visual sensor relative to the 3D object, based on the judgment result; and

a hand-eye calibration unit, configured to convert the target grabbing position and attitude to the grabbing position and attitude of the robot by hand-eye calibration.

**13.** The apparatus as claimed in claim 12, wherein the target position and attitude determining unit is further configured to:

when the grabbing template further comprises at least one said reference grabbing position and attitude, determine a grabbing position and attitude with the shortest movement distance from the current position and attitude in the grabbing template, to serve as the target grabbing position and attitude; and
when the grabbing template does not comprise the reference grabbing position and attitude, take the specified grabbing position and attitude to be the target grabbing position and attitude.

**14.** The apparatus as claimed in claim 11, further comprising: a grabbing template generating unit, configured to generate the grabbing template.

**15.** The apparatus as claimed in claim 14, wherein the grabbing template generating unit further comprises:

a specified image acquisition unit, configured to acquire a specified virtual image of a virtual model of the 3D object at a visual angle of the specified grabbing position and attitude;
a virtual image acquisition unit, configured to simulate multiple different positions and attitudes of the visual sensor relative to the 3D object, and obtain multiple virtual images of the virtual model of the 3D object at visual angles of the multiple different positions and attitudes;
a virtual image comparison unit, configured to determine a degree of similarity between each of the multiple virtual images and the specified virtual image respectively; and
a reference position and attitude saving unit, configured to take a corresponding position and attitude of a virtual image with a degree of similarity exceeding a preset threshold to be the reference grabbing position and attitude.

**16.** The apparatus as claimed in claim 11, wherein the current position and attitude determining unit further comprises:

a real image acquisition unit, configured to acquire a real image of the 3D object at a visual angle of a current position and attitude;
an image template acquisition unit, configured to acquire an image template of the 3D object, the image template representing multiple virtual images of a virtual model of the 3D object at visual angles of multiple different positions and attitudes;
a real image comparison unit, configured to determine a degree of similarity between the real image and each of the multiple virtual images respectively; and
a current position and attitude generating unit, configured to generate the current position and attitude based on a corresponding position and attitude of a virtual image with the highest degree of similarity.

**17.** The apparatus as claimed in claim 16, wherein the real image comparison unit is further configured to:

use a Mask-RCNN model to identify the 3D object in the real image and generate a mask of the 3D object; and
obtain a characteristic of the real image of the 3D object based on the mask of the 3D object.

**18.** The apparatus as claimed in claim 11, further comprising:
an Earth model establishing unit, configured to establish an Earth model with a specified grabbing point on a virtual model of the 3D object as a sphere center, wherein the current position and attitude, the specified grabbing position and attitude and the reference grabbing position and attitude are represented by position and attitude parameters in the Earth model.

**19.** A computing device, comprising:

a processor; and
a memory, used to store computer-executable instructions which, when executed, cause the processor to perform the method as claimed in any one of claims 1 - 10.

**20.** A computer-readable storage medium, having stored thereon computer-executable instructions for performing the method as claimed in any one of claims 1 - 10.

**21.** A computer program product, tangibly stored on a computer-readable storage medium and comprising computer-executable instructions which, when executed, cause at least one processor to perform the method as claimed in any one of claims 1 - 10.

Fig. 1

Fig. 2

Fig. 3

400

# Fig. 4

500

501

502

A  0  B

# Fig. 5

Fig. 6

**Fig. 7**

## INTERNATIONAL SEARCH REPORT

| International application No. |
| --- |
| **PCT/CN2020/105586** |

**A. CLASSIFICATION OF SUBJECT MATTER**

B25J 9/16(2006.01)i; B25J 19/04(2006.01)i; G06T 7/33(2017.01)i

According to International Patent Classification (IPC) or to both national classification and IPC

**B. FIELDS SEARCHED**

Minimum documentation searched (classification system followed by classification symbols)

B25J; G06T

Documentation searched other than minimum documentation to the extent that such documents are included in the fields searched

Electronic data base consulted during the international search (name of data base and, where practicable, search terms used)

CNABS; CNTXT; CNKI: 机器人, 机械手, 机械臂, 机械爪, 抓, 爪, 卡, 夹, 相机, 视觉, 摄像, 位姿, 姿态, 模板, 基准, 标准, 匹配, 比对, 对比; VEN; GBTXT; CATXT; EPTXT; USTXT; WOTXT: robot, manipulator, vidicon, camera, vision, templet, mould, cyclostyle, match, contrast, pose, posture, attitude, gesticulation.

**C. DOCUMENTS CONSIDERED TO BE RELEVANT**

| Category* | Citation of document, with indication, where appropriate, of the relevant passages | Relevant to claim No. |
| --- | --- | --- |
| X | CN 110076772 A (ZHEJIANG DAHUA TECHNOLOGY CO., LTD.) 02 August 2019 (2019-08-02)<br>description, paragraphs 67-162, and figures 1-5 | 1-4, 11-14, 19-21 |
| X | CN 109421050 A (BEIJING ORION STAR TECHNOLOGY CO., LTD.) 05 March 2019 (2019-03-05)<br>description, paragraphs 81-191, and figures 1-6 | 1-4, 11-14, 19-21 |
| X | CN 109407603 A (BEIJING ORION STAR TECHNOLOGY CO., LTD.) 01 March 2019 (2019-03-01)<br>description, paragraphs 67-208, and figures 1-4 | 1-4, 11-14, 19-21 |
| Y | CN 110076772 A (ZHEJIANG DAHUA TECHNOLOGY CO., LTD.) 02 August 2019 (2019-08-02)<br>description, paragraphs 67-162, and figures 1-5 | 5-10, 15-18 |
| Y | CN 109421050 A (BEIJING ORION STAR TECHNOLOGY CO., LTD.) 05 March 2019 (2019-03-05)<br>description, paragraphs 81-191, and figures 1-6 | 5-10, 15-18 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 April 2021** | **26 April 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/105586** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 109407603 A (BEIJING ORION STAR TECHNOLOGY CO., LTD.) 01 March 2019 (2019-03-01) description, paragraphs 67-208, and figures 1-4 | 5-10, 15-18 |
| Y | CN 106845354 A (INSTITUTE OF AUTOMATION, CHINESE ACADEMY OF SCIENCES) 13 June 2017 (2017-06-13) description, paragraphs 70-131, and figures 1-6 | 5-10, 15-18 |
| A | CN 110232710 A (PIXOEL TECHNOLOGY CO., LTD.) 13 September 2019 (2019-09-13) entire document | 1-21 |
| A | US 2019308325 A1 (CANON K. K.) 10 October 2019 (2019-10-10) entire document | 1-21 |

Form PCT/ISA/210 (second sheet) (January 2015)

**INTERNATIONAL SEARCH REPORT**
Information on patent family members

International application No.

**PCT/CN2020/105586**

| Patent document cited in search report | | | Publication date (day/month/year) | Patent family member(s) | | | Publication date (day/month/year) |
|---|---|---|---|---|---|---|---|
| CN | 110076772 | A | 02 August 2019 | CN | 110076772 | B | 02 February 2021 |
| CN | 109421050 | A | 05 March 2019 | | None | | |
| CN | 109407603 | A | 01 March 2019 | CN | 109407603 | B | 06 March 2020 |
| CN | 106845354 | A | 13 June 2017 | CN | 106845354 | B | 03 January 2020 |
| CN | 110232710 | A | 13 September 2019 | | None | | |
| US | 2019308325 | A1 | 10 October 2019 | JP | 2019181687 | A | 24 October 2019 |

Form PCT/ISA/210 (patent family annex) (January 2015)